# EUROPEAN PATENT APPLICATION

(11) **EP 1 870 433 A1**
(43) Date of publication of application: **26.12.2007**
(21) Application number: 07008512.1
(22) Date of filing: 26.04.2007
(51) Int. Cl.: C08J 11/06, B29B 17/00, B29B 17/02, C08L 25/04, C08L 23/06

(54) **Method for recycling synthetic foam material and system suited to implement said method**

(30) Priority: 28.04.2006 IT vi20060129
(71) Applicant: Yangtze River BV, 1183 AS Amstelveen (NL)
(72) Inventor: Zanatta, Giliana, 31100 Treviso (IT)
(74) Representative: Bonini, Ercole

(57) **Abstract**

Method for recycling synthetic foam material comprising a densification stage. Before said densification stage the method includes: a stage in which the synthetic material is ground into very small particles; a cleaning stage in which any polluting material is removed from the synthetic material; a first selection stage in which the synthetic material is separated from the polluting material.

## Description

The present invention concerns a method for recycling synthetic foam material particularly suited to be used for recycling polystyrene or polyethylene foam deriving from packaging.

It is known that synthetic foam material is often used for packing objects or foodstuff.

After transport the packaging materials are no more necessary and they are often disposed of as waste material, since they are difficult to reuse due to their particular shapes.

It is also known that in terms of environmental protection and economic profit it is considered increasingly important to recycle the synthetic foam material in order to obtain plastic material to be used for other purposes.

The current methods for recycling synthetic foam material generally include a melting stage aimed at breaking the cells of the structure that contain air, which are typical of synthetic foam materials, and making them collapse.

This melting operation, though enabling a compact plastic material to be obtained, has some acknowledged drawbacks.

The first of these drawbacks lies in that it irreparably damages the molecular structure of the synthetic material, thus obtaining a low-quality plastic material.

A further drawback is constituted by the fact that the melting process often produces a plastic material that is not homogeneous, inside which there are still cells containing air.

Another drawback is constituted by the fact that the melting process causes the introduction of humidity and dirt in the mass of the resulting material, said dirt being previously present on the surface of the synthetic material.

In order to overcome the problem described above, the synthetic material is often treated in advance by washing it with chemical products suited to remove the dirt present on its surface.

This treatment, however, increases the quantity of humidity present in the synthetic foam material and also adds particles of detergents and/or chemical compounds, thus polluting the molecular structure of the plastic material deriving from the melting process.

Furthermore, above all in the case of packaging materials for fresh foodstuff like fish, the type of dirt is such as to make the washing operation difficult in any case.

A further device for recycling synthetic foam material is also known, which is constituted by a thermal densifier that, by transferring to the synthetic foam material a quantity of thermal energy lower than the quantity needed by the same material to reach its melting temperature, causes the cells containing air to break and to collapse, without damaging the molecular structure of the material.

Said thermal densifier, though overcoming some of the previously-mentioned drawbacks, has further acknowledged weaknesses.

A first drawback lies in that also this treatment poses the problem represented by the possible presence of polluting material that adheres to the synthetic foam material and that during the thermal densification process can penetrate inside the plastic material and be included in it, thus negatively affecting its quality.

A further drawback lies in that, since the dimensions of the product resulting from the densification process are proportional to the initial dimensions, the plastic material obtained is constituted by pieces whose size is not homogeneous, and this reduces the quality of the product.

The object of the present invention is to overcome all the above-mentioned drawbacks typical of the known state of the art.

In particular, it is the object of the present invention to propose a method for recycling synthetic foam material that enables a high-quality plastic material to be obtained.

Therefore, it is the object of the present invention to propose a method for recycling synthetic foam material that enables a particularly clean and uniformly-sized plastic material to be obtained.

It is a further aim of the present invention to carry out a method for recycling synthetic foam material that allows a high-quality plastic material to be obtained even when it derives from very dirty material like that used for the packaging of fresh foodstuff like, for example, fish.

The aims described above have been achieved through the implementation of a method for recycling synthetic foam material according to the contents of the main claim, to which the reader should refer for the sake of brevity.

The aims described above have been achieved also through the construction of a system for recycling synthetic foam material according to the contents of claim 19.

All the other claims made contain specific characteristics of the method and system that are the subjects of the invention.

Advantageously, since the method comprises a grinding stage, it makes it possible to introduce in the densifier synthetic material in very small pieces with substantially uniform size.

Still advantageously, cleaning through mechanical rubbing of the synthetic material to be introduced inside the densifier allows the polluting material to be removed with no need of washing operations that, as already explained, negatively affect the quality of the final product.

The successive selection stages also advantageously allow the polluting material to be extracted from the production chain separated from the synthetic material.

The introduction of a shredding stage before the grinding stage also advantageously allows the grinding stage itself to be carried out with two successive operations, the first producing coarser pieces and the second producing smaller pieces, in order to obtain even more uniformly-sized pieces of the material to be densified.

If the synthetic material to be recycled contains polluting material particularly contaminated by generally humid organic residues, a drying stage can be added at the beginning of the whole process described above, in order to advantageously enable said humid pollutants to be dried and then to be removed during the mechanical rubbing stage.

The aforesaid objects and advantages, and others that are described below, will be highlighted in greater detail in the description of preferred embodiments of the invention, provided here as non-restrictive examples, with reference to the attached drawings, wherein:
- Figure 1 is a block diagram of the method for recycling synthetic material that is the subject of the invention;
- Figure 2 shows a schematic view of the recycling system carried out according to the invention.

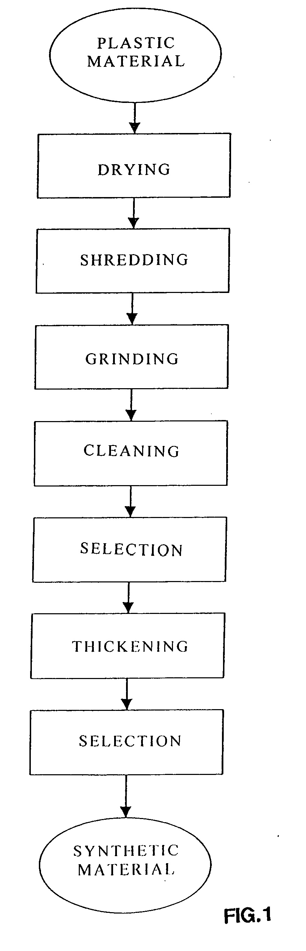

The method for recycling synthetic foam material that is the subject of the invention is illustrated in Figure 1, where it can be observed that it comprises at least one densification stage.

According to the invention, before the densification stage the process includes:
- at least one grinding stage intended to grind the synthetic material in very small particles;
- at least one cleaning stage intended to remove any polluting material from the synthetic material in very small particles;
- at least a first selection stage intended to separate the synthetic material from the polluting material.

Advantageously, this last selection stage makes it possible to separate the material in two flows before the densification stage.

The first of said two flows is ready for the densification stage, while the second can be rejected or submitted to a more suitable treatment.

Said second flow, in fact, contains the polluting material as well as synthetic material dust.

According to the preferred embodiment of the invention described herein, the grinding stage is carried out in two parts, the first of which is a shredding stage during which the synthetic material is shredded into coarse pieces, followed by the actual grinding stage during which the synthetic material is ground to obtain very small particles.

As already explained, said double shredding and grinding operation enables more regular and uniform pieces to be obtained.

Before the grinding stage, however, the process may also include a drying stage that, as explained above, makes it possible to dry any humid polluting material that would not be easily detached from the synthetic foam material through a mechanical rubbing operation.

Following the densification stage, the process also includes a second selection stage intended to separate from the densified synthetic material the synthetic material dust that may have been left after the first cleaning and selection stage carried out before the densification stage.

This advantageously allows the quality of the final product to be increased.

As regards the cleaning stage, it consists of a mechanical rubbing operation and is generally carried out at the same time as the grinding stage, using the same device that is used to grind the synthetic material.

This, however, should not be understood as a limitation for different embodiments of the invention in which the mechanical rubbing stage is carried out by a rubbing device separate from the grinding device.

As regards the densification stage, this is generally carried out in a cyclone-type thermal densifier.

In particular, the densification stage consists in supplying a given quantity of heat to the synthetic material, in order to make it collapse without melting.

However, most of the known densifiers supply said heat through mechanical friction and this causes the inconvenience that the synthetic material does not receive the heat uniformly, which worsens the quality of the resulting material.

In particular, some pieces of material coming out are not completely densified, while others present melted outer layers.

For this reason, according to the method that is the subject of the invention, a cyclone-type densifier is used, that is, a densifier where the material to be densified is introduced in a cyclone flow of hot air.

The densified material assumes such a weight that causes it to flow out of the densifier through gravity, so that its quality will be substantially optimal.

Furthermore, this advantageously makes it possible to perform the densification operation in a continuous manner, thus considerably shortening the material processing times.

In the densifiers with mechanical friction, in fact, it is necessary to insert the material to be treated in the densifier, perform the treatment, empty the densifier removing the densified material and fill it again with other material to be treated.

Consequently, the production of densified material is discontinuous.

Using the cyclone-type densifier, on the other hand, the material loading and unloading stages are continuous and therefore it is not necessary to stop the machine to carry out these operations.

Thus, advantageously, the production of densified material is substantially constant.

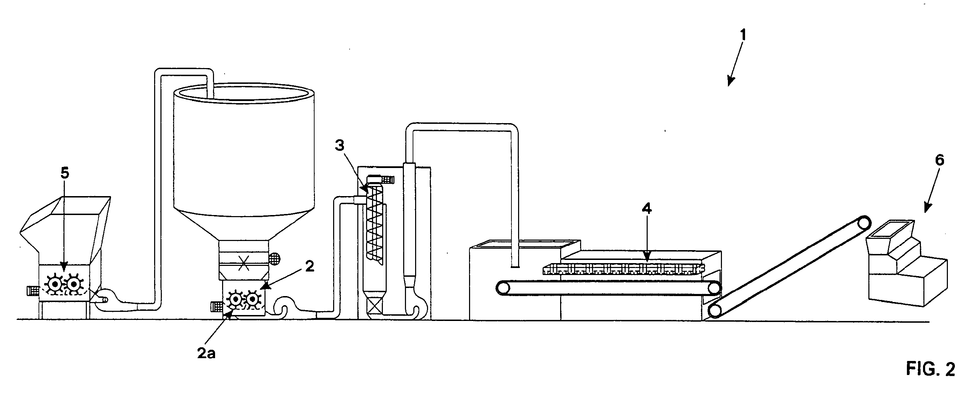

As regards the synthetic foam material recycling system that is the subject of the present invention and implements the method that is also subject of the invention, it is represented in Figure 2, where it is indicated as a whole by **1** and where it can be observed that it comprises:
- at least one grinder **2** suited to grind the synthetic material in very small particles;
- at least one mechanical rubbing device **2a** suited to rub the synthetic material in order to remove the polluting material attached to it;
- at least one rotary screen **3** suited to separate the synthetic material from the polluting material after the mechanical rubbing operation;
- at least one thermal densifier **4** suited to densify the synthetic material.

It should be noted that, as already explained, according to the preferred embodiment of the invention described herein the function of the mechanical rubbing device **2a** is performed by the grinder **2** so that the two machines coincide.

According to different embodiments of the invention not represented herein, the system that is the subject of the invention may comprise a mechanical rubbing device separate from the grinder.

As to the shredding stage that takes place before the grinding stage, it is generally carried out by a shredder **5** that, in this case, may be of the type with counter-rotating shafts, while the grinder **2** may be of the type with rotary knives.

As to the drying stage that takes place before the grinding stage, it is generally carried out by a dryer, not represented herein, arranged upstream of the shredder **5** and generally of the infrared type.

As to the second selection stage, it can be carried out by a gravitational dust exhaust **6** or, according to different embodiments, by a vibrating screen.

This device is, in any case, positioned downstream of the densifier **4** and is particularly suited to separate the pieces of plastic material having different sizes.

As to the thermal densifier **4,** as already said, it is preferably of the cyclone type.

The synthetic foam material suited to be treated according to the method subject of the invention by means of the system **1** of the invention, is generally constituted by polystyrene and polyethylene foam.

In practice, the synthetic material to be treated is introduced in the infrared dryer that submits it to a thermal treatment that does not reach the melting temperature of the material, but makes it possible to dehumidify and dry the polluting material.

The synthetic material submitted to the treatment described above is successively shredded by the shredder **5** and ground by the grinder **2** to obtain very small particles.

During this last operation, the grinder **2** also makes it possible to simultaneously carry out the mechanical rubbing operation intended to remove the polluting material from the synthetic material.

The material resulting from the grinding and mechanical rubbing operation is introduced in the rotary screen **3** that separates the synthetic material from the polluting dust produced during the rubbing operation.

At the same time, the rotary screen **3** also makes it possible to separate from the synthetic material in small particles the synthetic material dust that is generated by the mechanical rubbing operation and that, if it were not separated, would negatively affect the quality of the final product.

Successively, the small particles of synthetic material are introduced in the thermal densifier **4** that will produce the recycled plastic material.

In order to improve the quality of the final product, a further plastic material selection stage is planned, which is carried out using the gravitational dust exhaust 6 described above.

In this way, high-quality plastic material in uniformly-sized pieces is certainly obtained.

This material is thus ready to be packed and sent to the companies that will use it in their production processes.

For the reasons explained above, the method and the system that are the subjects of the invention achieve all the set aims.

In particular, the invention achieves the aim to develop a method for recycling synthetic foam material that enables a high-quality plastic material to be obtained.

Therefore, the invention also achieves the aim to develop a method for recycling synthetic foam material that enables a particularly clean and uniformly-sized plastic material to be obtained.

A further aim has also been achieved, and precisely the aim to carry out a method for recycling synthetic foam material that allows a high-quality plastic material to be obtained even when it derives from very dirty material like that used for the packaging of fresh foodstuff such as fish.

On implementation, the method and the system that are the subjects of the invention may undergo changes that, though not illustrated or described herein, shall nonetheless be covered by the present patent, provided that they come within the scope of the claims that follow.

Where the technical characteristics illustrated in the claims are followed by reference numbers, these are provided for the sole purpose of facilitating the reader and said reference numbers shall consequently have no restrictive effect on the coverage of each element identified as an example.

## Claims

1. Method for recycling synthetic foam material comprising at least one densification stage, **characterized in that**, before said densification stage, it includes:
- at least one grinding stage intended to grind said synthetic material into very small particles;
- at least one cleaning stage intended to remove any polluting material from the synthetic material;
- at least one first selection stage intended to separate said synthetic material from said polluting material.

2. Method according to claim 1), **characterized in that** said at least one grinding stage includes a shredding stage.

3. Method according to claim 1), **characterized in that** before said at least one grinding stage it includes also a stage for drying said synthetic material.

4. Method according to claim 1), **characterized in that** after said densification stage there is at least a second selection stage intended to separate said densified synthetic material from synthetic material dust.

5. Method according to claim 1), **characterized in that** said cleaning stage takes place through mechanical rubbing.

6. Method according to claim 1) or 5), **characterized in that** said grinding stage and said cleaning stage take place at the same time.

7. Method according to claim 1) or 6), **characterized in that** said grinding stage is carried out by a grinder (2).

8. Method according to claim 7), **characterized in that** said grinder (2) is of the type with rotary knives.

9. Method according to claim 2), **characterized in that** said shredding stage is carried out by a shredder (5).

10. Method according to claim 9), **characterized in that** said shredder is of the type with counter-rotating shafts.

11. Method according to claim 1), **characterized in that** said first selection stage is carried out by a rotary screen (3).

12. Method according to claim 1), **characterized in that** said densification stage is carried out by a thermal densifier (4).

13. Method according to claim 4), **characterized in that** said second selection stage is carried out by a gravitational dust exhaust (6).

14. Method according to claim 4), **characterized in that** said second selection stage is carried out by a vibrating screen.

15. Method according to claim 3), **characterized in that** said drying stage is carried out by an infrared drier.

16. Method according to claim 3), **characterized in that** said densification stage is carried out by a cyclone-type densifier (4).

17. Method according to claim 1), **characterized in that** said synthetic material is polystyrene foam.

18. Method according to claim 1), **characterized in that** said synthetic material is polyethylene foam.

19. System (1) for recycling synthetic foam material, **characterized in that** it comprises, in sequence:
- at least one grinder (2) suited to grind said synthetic material into very small particles;
- at least one mechanical rubbing device (2a) suited to rub said synthetic material and remove any polluting material adhering to it;
- at least one rotary screen (3) suited to separate said synthetic material from said polluting material;
- at least one thermal densifier (4) suited to densify said synthetic material.

20. System (1) according to claim 19), **characterized in that** it comprises a dryer positioned upstream of said grinder (2).

21. System (1) according to claim 20), **characterized in that** it comprises a shredder (5) positioned between said dryer and said grinder (2).

22. System (1) according to claim 19), **characterized in that** it comprises a gravitational dust exhaust (6) downstream of said densifier (4).

23. System (1) according to claim 19), **characterized in that** it comprises a vibrating screen downstream of said densifier (4).

24. System (1) according to claim 19), **characterized in that** said mechanical rubbing device (2a) is constituted by said grinder (2).

25. System (1) according to claim 19) or 24), **characterized in that** said grinder (2) is of the type with rotary knives.

26. System (1) according to claim 21), **characterized in that** said shredder (5) is of the type with counter-rotating shafts.

27. System (1) according to claim 20), **characterized in that** said dryer of the infrared type.

28. System (1) according to claim 19), **characterized in that** said thermal densifier (4) is a cyclone-type densifier.

29. System (1) according to claim 19), **characterized in that** said synthetic material is polystyrene foam.

30. System (1) according to claim 19), **characterized in that** said synthetic material is polyethylene foam.
